# EUROPEAN PATENT SPECIFICATION

(11) **EP 2 092 021 B1**
(45) Date of publication and mention of the grant of the patent: **21.05.2014**
(21) Application number: 07844346.2
(22) Date of filing: 17.10.2007
(51) Int. Cl.: C09B 67/20, C09B 48/00, C08G 65/26, B01F 17/46

(54) **PIGMENT DISPERSANTS**
PIGMENTDISPERGATOREN
DISPERSANTS POUR PIGMENTS

(30) Priority: 17.10.2006 US 581481
(43) Date of publication of application: 26.08.2009
(73) Proprietor: Sun Chemical Corporation, Parsippany, NJ 07054 (US)
(72) Inventor: ROMANOVA, Tatiana N., Loveland, OH (US); SUNG, Ed, Cincinnati, OH (US); SCHWARTZ, Russell J., Cincinnati, OH 45242 (US)
(74) Representative: Fuchs
(86) International application number: PCT/US2007/081643
(87) International publication number: WO 2008/049004

(56) References cited:
- EP-A- 0 763 378
- DE-A1- 2 152 284
- JP-A- 10 298 476
- JP-A- 2002 069 323
- US-A1- 2002 102 485
- MOORE ET AL.: "Poly(amine esters) derived from Diethyl 1,4-Cyclohexanedione-2,5- dicarboxylate" MACROMOLECULES, vol. 8, no. 2, 1975, pages 121-127, XP002474360
- WU ET AL.: "Hydrogen bond-induced rigid Oligoanthranilamide Ribbons that are planar and straight" ORGANIC LETTERS, vol. 6, no. 2, 2004, pages 229-232, XP002474361

## Description

This invention relates to pigment dispersants, which are easy to prepare and are useful for dispersing a wide variety of pigments.

Pigments are dispersed as fine particles into a liquid medium for use in inks (including ink jet formulations) and coatings, as well as plastics, cosmetics, adhesives, and the like. It is desirable for the pigment to be dispersed as finely as possible and as rapidly as possible into the liquid medium and remain as a stable fine dispersion over time for optimum results. Unfortunately, the dispersion of fine particles in liquids is unstable in that the particles tend to agglomerate or flocculate causing uneven pigmentation, changes in rheology, and may cause changes in color value over time in the product where pigmentation is desired.

Numerous pigment dispersants have been developed in order to minimize the effects of agglomeration and/or flocculation. They have been used to form pigment dispersions that are used in a variety of water borne and solvent borne coating compositions. Examples of U.S. Patents describing dispersants and pigment dispersions include U.S. Patents 4,496,686, 4,673,705, 4,754,056, 5,034,444, 5,424,364, 6,037,414, 6,451,950, 6,495,618, and 6,878,799.

JP 10 298476 A refers to aqueous recording fluids for ink jet that allow for good water-resistant properties and that consist of a pigment, an aqueous resin, water as well as an organic colorant derivate which may be an anthraquinone, acridone, a phthalocyanine or azo dye or a thioindigo system. The recording fluid comprises the pigment in an amount of less than or about 10% by weight and the organic colorant derivate in an amount of up to about 20 % by weight. Additionally, solvents are added to adjust viscosity.

The dispersants act to lower the viscosity of pigment dispersions. As a result, more pigment can be employed, affording very concentrated dispersions which can be satisfactorily handled and dispersed. However, the upper limit of pigment concentration in concentrated pigment dispersions is determined by the viscosity, and as the pigment concentration increases linearly, the viscosity of the dispersion increases exponentially. When the viscosity becomes too high, the pigment can no longer be dispersed satisfactorily or handled during ink or coating manufacturing. In addition, the system experiences excessive temperature increases due to the frictional forces that occur during the dispersion process. This can cause degradation of certain pigments and inks or coating resins. Incorporation of the appropriate dispersant helps to eliminate or minimize such defects by providing a more efficient dispersion and dispersion stabilization.

The present invention provides new pigment dispersants.

### SUMMARY OF THE INVENTION

The present invention relates to dispersants for pigments. The present invention further relates to a method of preparing the pigment dispersants and of dispersing a pigment. The new dispersants provide reduced viscosity for the pigment dispersions which can be solvent based, water based, energy curable or a combination of such systems.

The dispersants of the present invention comprise the reaction product of at least one dialkylsuccinyl succinate with one or more mono- or diamines, where at least one amino group is primary, or an oxidized, cyclized or functionalized, by salt formation, hydrolysis or amide formation, product of the reaction product, wherein at least one of the one or more mono- or diamine is polymeric and contains a poly(alkylene oxide) or poly(alkylene) moiety.

### BRIEF DESCRIPTION OF THE FIGURES

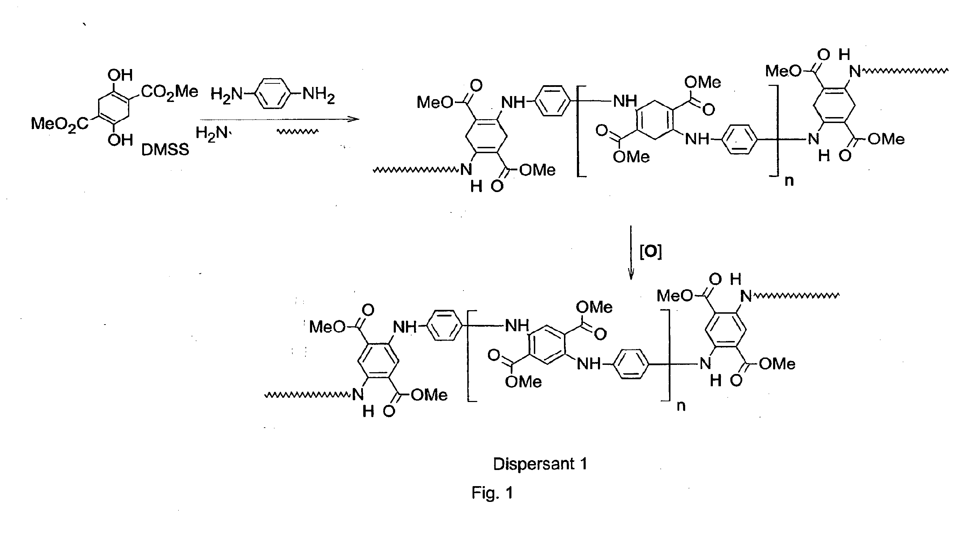

Fig. 1 shows the reaction scheme of Example 1.

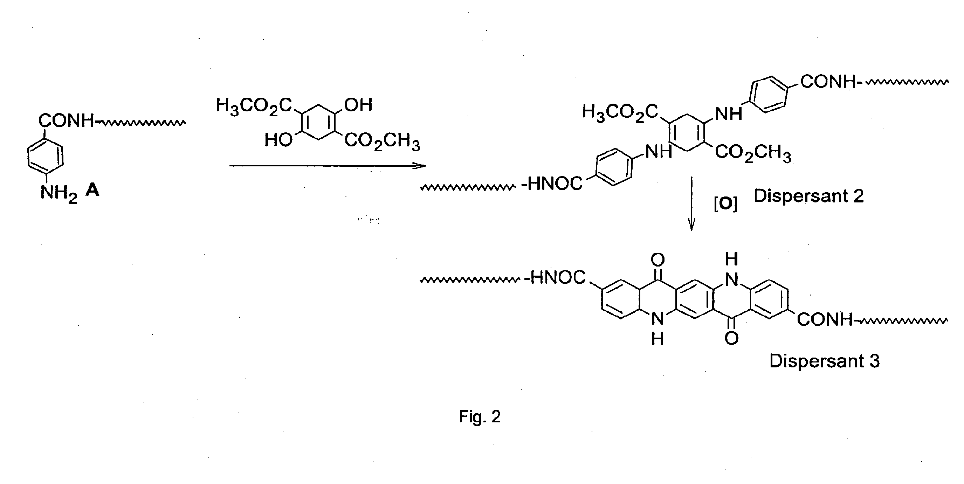

Fig. 2 shows the reaction scheme of Example 2.

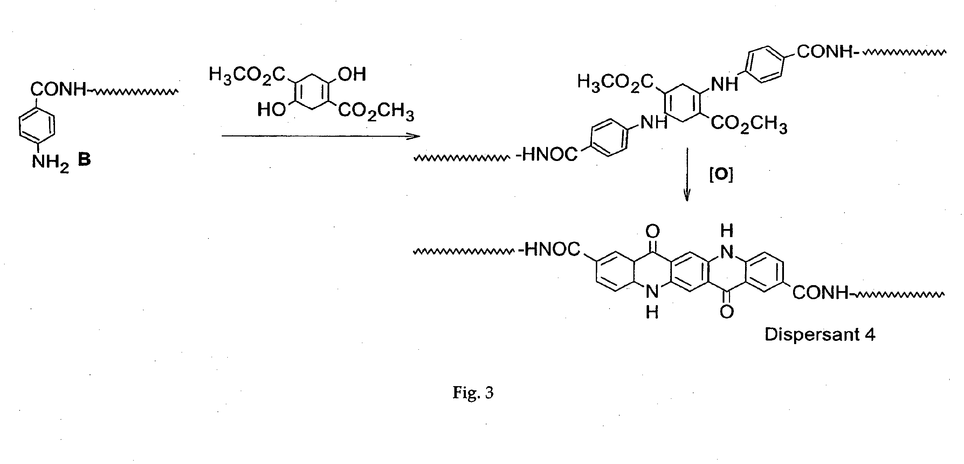

Fig. 3 shows the reaction scheme of Example 3.

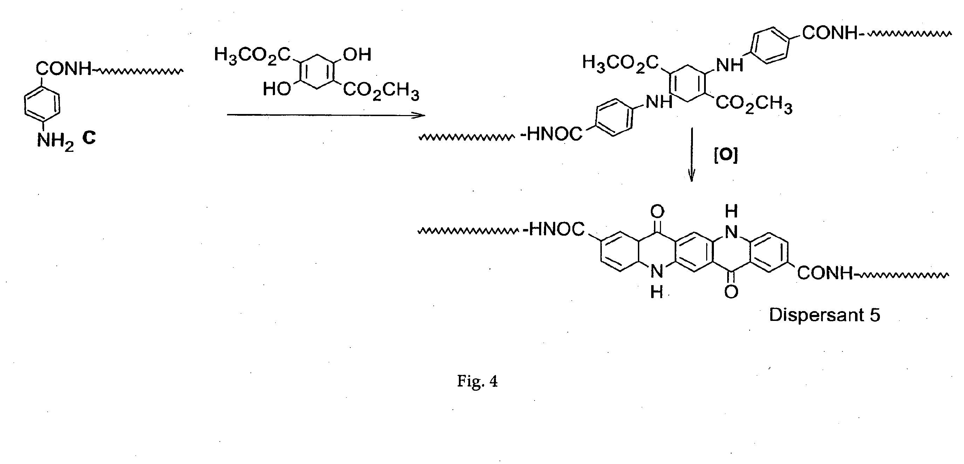

Fig. 4 shows the reaction scheme of Example 4.

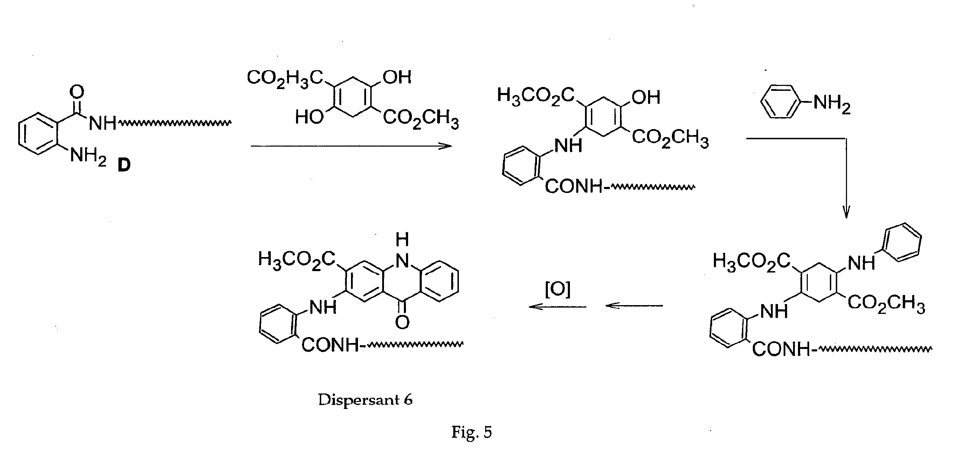

Fig. 5 shows the reaction scheme of Example 5.

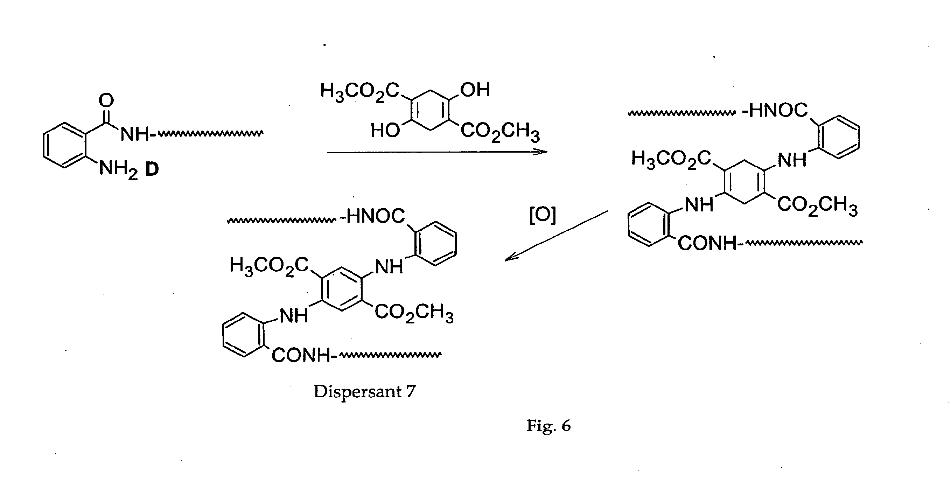

Fig. 6 shows the reaction scheme of Example 6.

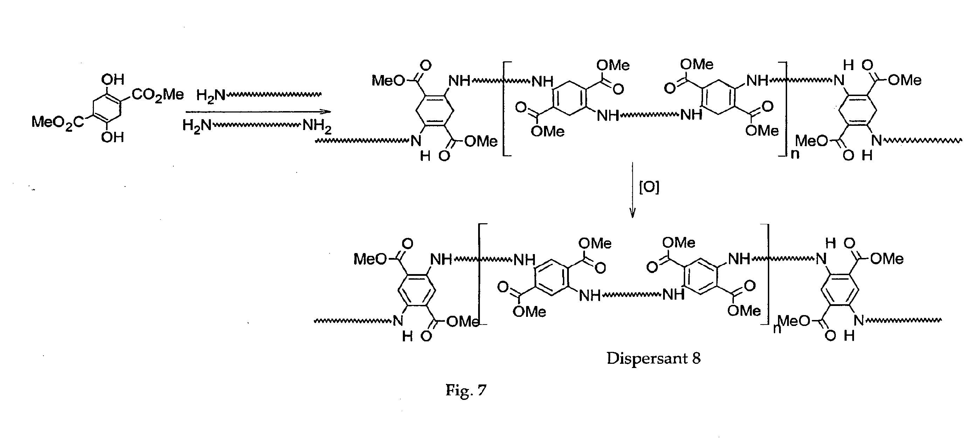

Fig. 7 shows the reaction scheme of Example 7.

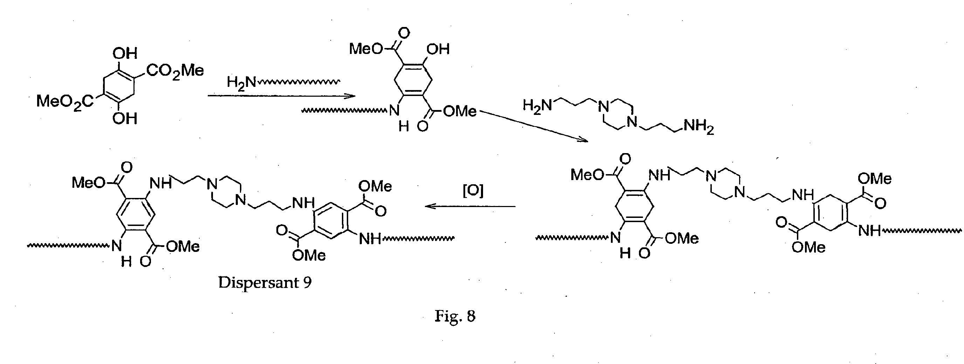

Fig. 8 shows the reaction scheme of Example 8.

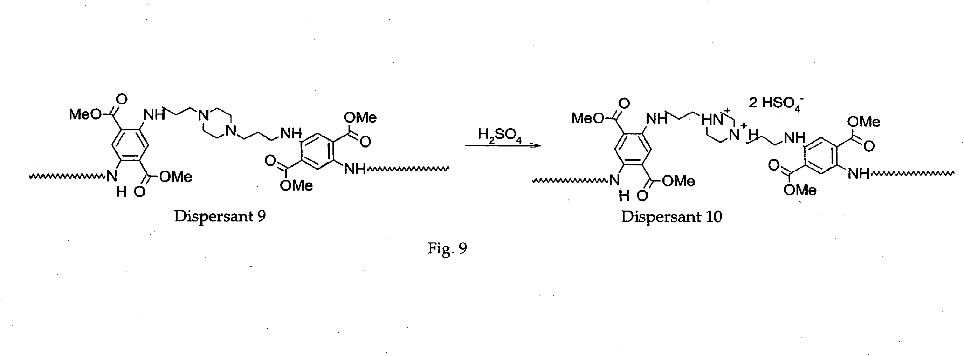

Fig. 9 shows the reaction scheme of Example 9.

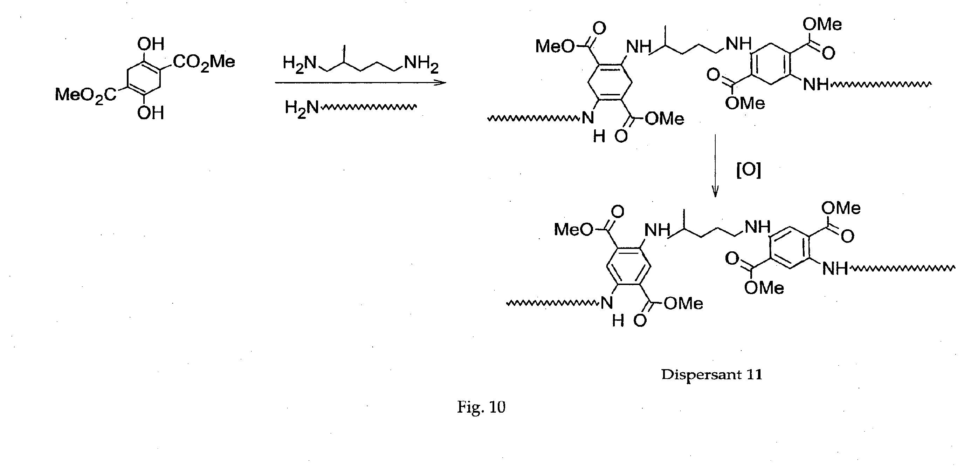

Fig. 10 shows the reaction scheme of Example 10.

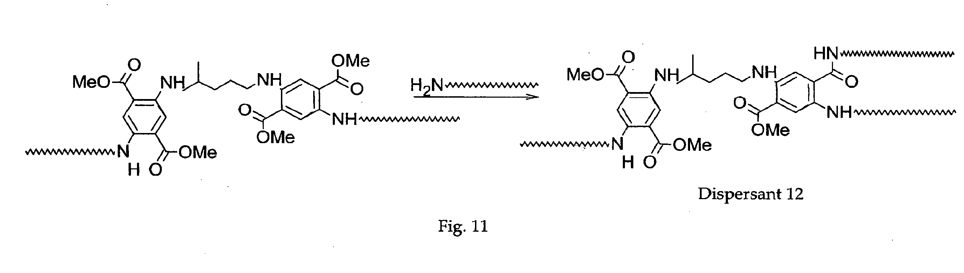

Fig. 11 shows the reaction scheme of Example 11.

In all of the drawings, the wavy line is intended to indicate the polymeric nature of the moiety and not to indicate any particular number of atoms, functionalities, substituents or structures.

### DESCRIPTION OF THE INVENTION

In accordance with the present invention, new pigment dispersants are provided.

The novel pigment dispersants of the present invention are particularly effective for the dispersion of both inorganic pigments and organic pigments. Any known pigments can be used to form pigment dispersions using these dispersants. Examples of suitable pigments include metallic oxides such as titanium dioxide, iron oxides of various colors, and zinc oxide; carbon black; filler pigments such as talc, china clay, barytes, carbonates, and silicates; a wide variety of organic pigments such as quinacridones, diketopyrrolopyrroles, phthalocyanines, perylenes, azo pigments, and indanthrones carbazoles such as carbazole violet, isoindolinones, isoindolones, isoindolines, thioindigio reds, benzimidazolones and benzimidazolinones; and metallic flakes such as aluminum flake, pearlescent flakes, and the like.

The pigments suitable for use in the present invention thus include International Colour Index or C.I. Pigment Black 1, C.I Pigment Black 31, C.I. Pigment Black 11, C.I. Pigment Black 7, C.I Pigment Black 250, C.I. Pigment Blue 61, C.I. Pigment Blue 62, C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6, C.I. Pigment Blue 16, C.I. Pigment Blue 29, C.I. Pigment Blue 27, C.I. Pigment Green 17, C.I. Pigment Green 18, C.I. Pigment Green 7, C.I. Pigment Green 36, C.I. Pigment Orange 5, C.I. Pigment Orange 13, C.I. Pigment Orange 16, C.I. Pigment Orange 34, C.I. Pigment Orange 36, C.I. Pigment Violet 3, C.I. Pigment Violet 27, C.I. Pigment Violet 23, C.I. Pigment Violet 19, C.I. Pigment Red 122, C.I. Pigment Red 202, C.I. Pigment Red 206, C.I. Pigment Red 207, Pigment Red 254, C.I. Pigment Red 22, C.I. Pigment Red 23, C.I. Pigment Red 17, C,I. Pigment Red 210, C.I. Pigment Red 170, C.I. Pigment Red 188, C.I. Pigment Red 185, C.I. Pigment Red 146, C.I. Pigment Red 144, C.I. Pigment Red 101, C.I. Pigment Red 176, C.I. Pigment Red 48:1, C.I. Pigment Red 48:2, C.I. Pigment Red 57:1, C.I. Pigment Red 81:1, C.I. Pigment Red 81:2, C.I. Pigment Red 81:3, C.I. Pigment Red 81:5, C.I. Pigment Red 179, C.I. Pigment Red 3, C.I. Pigment Red 249, C.I. Pigment Red 114, C.I. Pigment Red 181, C.I. Pigment Yellow 1, C.I. Pigment Yellow 2, C.I. Pigment Yellow 3, C.I. Pigment Yellow 147, C.I. Pigment Yellow 142, C.I. Pigment Yellow 42, C.I. Pigment Yellow 151, C.I. Pigment Yellow 154, C.I. Pigment Yellow 180, C.I. Pigment Yellow 138, C.I. Pigment Yellow 139, C.I. Pigment Yellow 93, C.I. Pigment Yellow 109, C.I. Pigment Yellow 110, C.I. Pigment Yellow 14, C.I. Pigment Yellow 12, C.I. Pigment Yellow 17, C.I. Pigment Yellow 13, C.I. Pigment Yellow 74, C.I. Pigment Yellow 73, C.I. Pigment Yellow 75, C.I. Pigment Yellow 83, C.I. Pigment Yellow 65, C.I. Pigments Yellow 128, D&C Red No. 7, D&C Red No. 6 and D&C Red No. 34. Other pigment examples include carbon black pigments such as Regal 330 (available from Cabot Corporation); quinacridone pigments such as Quinacridone Magenta (228-0122) (available from Sun Chemical Corporation); diarylide yellow pigments such as AAOT Yellow (274-1788) (available from Sun Chemical Corporation); and phthalocyanine blue pigments such as Blue 15:3 (294-1298) (available from Sun Chemical Corporation). Usable pigments are not limited to the foregoing.

The dispersants of the present invention comprise the reaction product of at least one dialkylsuccinyl succinate, i.e., dialkyl-2,5-dioxo-1,4-cyclohexanedicarboxylate, with one or more mono- or diamines, where at least one amino group is primary, with or without further modification that is oxidation, cyclization, salt formation, hydrolysis or amide formation, and at least one of the one or more mono- or diamine reactant is polymeric and contains a poly(alkylene oxide) or poly(alkylene) moiety. The alkyl groups of the succinate can have 1 to about 18 carbon atoms, and preferably are lower alkyl of 1 to 4 carbon atoms, and most preferably are methyl. The alkyl groups can be straight chained or branched or cyclic or combination thereof.

The amines can generally conform to the formula (Z¹HN)ₘ-R-(NH Z²)ₙ in which n and m are independently 0, 1, 2 or more, and m plus n is at least 1. In the preferred amines, n and m independently do not exceed 2. Z¹ and Z² can be same or different, and the R, Z¹ and Z² in each amine are independently hydrogen or linear, branched or cyclic aliphatic, heterocyclic, or aromatic group, or combination thereof, which may be saturated or unsaturated (isolated or conjugated), such as alkyl, alkylene, alkenyl, alkenylene, alkynyl, alkynylene, aryl, arylene, as well as such groups containing O, N, S, P, Si and/or halogen in their main chain or in a side chain, or combinations thereof, provided that at least one amine reactant has at least one primary amino group and it may also be polymeric. Polymeric reactants are those containing a polymeric group comprising the same repeating monomer units (homopolymer) or multiple monomer units (copolymer), or both, where the monomer can be any type of monomer. Such copolymers can be further classified as random, alternating, graft, block, branched, comb-like polymers, or combinations thereof.

The R, Z¹ and Z² group can be unsubstituted or substituted by, for instance, one or more functional groups. Examples of functional groups include, but are not limited to, hydroxyl, ether, carboxyl, halogen, cyano, primary, secondary or tertiary amino, thiol, sulfonate, sulfates, phosphate, phosphonate, and the like.

In one preferred embodiment, the R group is or contains a poly(alkylene oxide) moiety, and in another preferred embodiment, the R group contains a polyalkylene moiety. In a further preferred embodiment, the R group contains an aliphatic group. In another preferred embodiment, the R group contains a heterocyclic group. In yet another preferred embodiment, the R group contains an aromatic group. In another preferred embodiment, the R group contains a benzamido moiety. In yet another preferred embodiment, the amido nitrogen of the benzamide moiety is linked to either a poly(alkylene oxide) moiety or another group which makes the R group polymeric.

Examples of useful amines include, but are not limited to, NH₃, methylamine, ethylamine, n-propylamine, n-butylamine, n-hexylamine, hydroxyethylamine, hydroxylamine, 1,3-pentanediamine, 2-methyl-1,5-pentanediamine, 1,6-hexanediamine, hydrazine, methylhydrazine, 1,1-dimethylhydrazine,, phenylhydrazine, 1-methyl-1-phenylhydrazine, 1-acetyl-1- phenylhydrazine, dimethylaminoethylamine, diethylaminoethylamine, 2-ethylhexylaminoethylamine, stearylaminoethylamine, oleylaminoethylamine, dimethylaminopropylamine, dibutylaminopropylamine, diethylaminobutylamine, dimethylaminoamylamine, diethylaminohexylamine, 1-(2-aminoethyl)piperazine, 1,4-bis (3-aminopropyl)piperazine, piperidinomethylamine, piperidinoethylamine, piperidinopropylamine, pipecolinoethylamine, pipecolinopropylamine, imidazolopropylamine, morpholinoethylamine, morpholinopropylamine, 1,2-cyclopentanediamine, 1,2-cyclohexanediamine, aniline, benzylamine, o-phenylenediamine, 2,3- or 1,8-diaminonaphthalene, 2,3- or 3,4-diaminopyridine, 9,10-diaminophenanthrene, N,N-dimethyl-1,4-phenylenediamine and the like.

The number of primary amino groups is not limited but the preferred amines have one or two primary amino groups in their structure. The alkylene oxide group of the poly(alkylene oxide) amines can contain 1 to about 5 carbon atoms. Those containing 2 or 3 carbon atoms are preferred and are well known, commercially available materials. These amines contain a polyether backbone that is based either on propylene oxide, ethylene oxide or mixtures of propylene and ethylene oxides. The alcohols which are aminated to form the amines, as well as the corresponding thiols, can also be employed. For the purposes of the present invention, the poly(oxyalkylene)amines are preferred.

At least one of the one or more mono- or diamines employed is polymeric. The polymeric reactant can contain primary or secondary amino or other reactive groups. More than one different high molecular weight reactants can be employed if desired. In the reaction of dialkylsuccinyl succinate with amines, all of the amines can be polymeric.

The preferred polymeric amine can also be a polyalkyleneamine or aminobenzamide of the general structure: 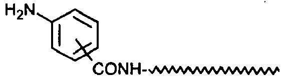 or other functionally modified polymeric amines.

It is the purpose of a difunctional reactant, when employed, to link two or more dialkylsuccinyl succinate compounds together. The preferred difunctional reactant is any difunctional amine containing primary or secondary amino groups which can used separately or in combination, and they may be symmetric or asymmetric. These difunctional amines need not be polymeric, in which case they contain a moiety which can further react, after coupling with the dialkylsuccinyl succinate, with a polymeric reactant. Thus, the polymeric function can be added during the first reaction of the dialkylsuccinyl succinate with the amine or subsequently during further group modification such as amide formation from an ester group with polymeric amine.

In general, any polymeric reactants that are useful in this invention have equivalent molecular weight between about 250 to 5,000 Daltons, preferably between about 500 to 3,000 Daltons, and more preferably between about 1,000 to 2,000 Daltons. Useful difunctional polymeric reactants have equivalent molecular weights from about 100 to 10,000 Daltons, preferably from about 150 to 5,000 Daltons, and more preferably from about 250 to 2,000 Daltons.

The succinate-amine reaction is effected at a temperature of between about 20° to 180° C., preferably between about 100 to 130 °C. When two or more amines are used, the reaction can be conducted stepwise. If desired, the reaction can be allowed to continue for a sufficiently long time or sufficiently high temperature for further modification such as oxidation, cyclization, salt formation or other functional group modification. No solvent is required but can be used if desired.

The dispersant of the present invention can generally be represented as containing the partial structural formulae 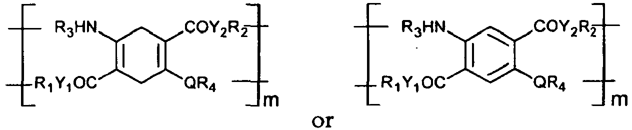 separately or in a mixture.

In the above formulae, m must be at least 1, and can be up to 10 or more, and Y₁ & Y₂ can be the same or different and each corresponds to O, S or NR', Q corresponds to O or NH, and R₁, R₂, R₃, R₄ & R' can be the same or different and each is independently hydrogen or linear, branched or cyclic aliphatic, heterocyclic or aromatic group, or combination thereof, which may be saturated or unsaturated (isolated or conjugated), such as alkyl, alkylene, alkenyl, alkenylene, alkynyl, alkynylene, aryl, arylene, as well as possess groups which contain O, N, S, P, Si and/or halogen in their main chain or in a side chain, or combinations thereof, provided that at least one reactant is polymeric. Polymeric reactants are those containing a polymeric group comprising the same repeating monomer units (homopolymer) or multiple monomer units (copolymer), or both, where the monomer can be any type of monomer. Such copolymers can be further classified as random, alternating, graft, block, branched, comb-like polymers, or combinations thereof.

The R groups can be unsubstituted or substituted with one or more functional groups, which can be characterized as containing other atoms in addition to carbon and hydrogen. Each of the terminal groups of the dispersant will depend on the reactant(s) employed and can be independently hydrogen, halogen and/or any monovalent group corresponding to R. The presence of a function group in R provides the ability to couple other entities to the molecule, as noted below.

Examples of functional groups include, but are not limited to, hydroxyl, carboxyl, halogen, cyano, primary, secondary or tertiary amino, thiol, sulfonate, sulfates, phosphate, phosphonate, and the like.
In one preferred embodiment, the R group is or contains a poly(alkylene oxide) moiety, and in another preferred embodiment, the R group contains a polyalkylene moiety. In another preferred embodiment, the R group contains an aliphatic group. In yet another preferred embodiment, the R group contains a heterocyclic group. In another preferred embodiment, the R group contains an aromatic group. In another preferred embodiment, the R group contains a benzamido moiety. In yet another preferred embodiment, the amido nitrogen of the benzamide moiety is linked to either a poly(alkylene oxide) moiety or another group which makes the R group polymeric. At least one R is polymeric and contains a poly(alkylene oxide) or poly(alkylene) moiety.

When aniline or its derivatives of the general formula 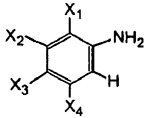 is used as the primary amine reagent, the product of the reaction with dialkylsuccinyl succinate can be further oxidized and cyclized forming dispersants of the formula 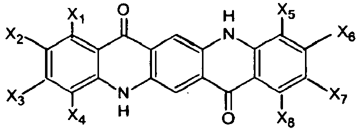 or 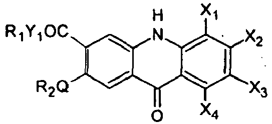 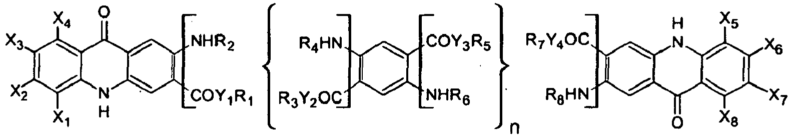 or
or a mixture thereof. In the last formula, any NH- or COY₁₋₄ groups of the chain terminal group can be linked through the R moiety of which it is a part to either of the NH- or COY₁₋₄ groups of the adjacent repeating unit forming the following possible connections: NH to NH, COY to YCO or NH to YCO. In the above formulae, n can be 0 to 10, Q is O or NH, Y₁, Y₂, Y₃, Y₄ can be the same or different and each corresponds to O, S or NR', and X₁, X₂, X₃, X₄, X₅, X₆, X₇, X₈ can be the same or different and may be H, a functional group or a functional group linked to a polymer.

Examples of functional groups include, but are not limited to R", OR", COR", COOR", OCOR", carboxylates, halogens, CN, NR"R"', SO₃H, sulfonates, sulfates, NR"(COR"'), CONR", PO₃H₂, phosphonates, N=NR", SOR", NSO₂R", wherein R₁, R₂, R₃, R₄, R₅, R₆, R₇, R₈, R', R" & R"' can be the same or different, is independently hydrogen, or linear, branched or cyclic aliphatic, heterocyclic or aromatic group, or combination thereof, which may be saturated or unsaturated (isolated or conjugated), such as alkyl, alkylene, alkenyl, alkenylene, alkynyl, alkynylene, aryl, arylene, as well as such groups containing O, N, S, P, Si and/or halogen in their main chain or in a side chain, or combinations thereof, provided that at least one reactant is polymeric. Polymeric reactants are those containing a polymeric group comprising the same repeating monomer units (homopolymer) or multiple monomer units (copolymer), or both, where the monomer can be any type of monomer. Such copolymers can be further classified as random, alternating, graft, block, branched, comb-like polymers, or combinations thereof.

Also, any functional group of the dispersant may be modified to form a dispersant with modified functional group. For example, a dispersant containing a tertiary amine group can be converted into salt (ammonium) form by treatment with an acid. The anion may be inorganic, such as halide, sulfate, phosphate, and the like, or organic, such as acetate, and the like. Any carboxylic or other acid groups of the dispersant can be converted into salt form by treatment with organic or inorganic base. Any functional group can undergo further modification. For example, a dispersant containing an ester group can be hydrolyzed or reacted with amines, alcohols or thiols and the like. Another example is oxidation of a dispersant to form an aromatic structure and the like. The specific modification is effected after the reaction of at least one dialkylsuccinyl succinate with at least one primary amine. The polymeric function can be realized during the first reaction of the dialkylsuccinyl succinate with primary amine or subsequently during further group modification, such as amide formation from an ester group with polymeric amine.

To form surface treated pigments an individual pigment or a mixture of pigments is preferably predispersed with one or more dispersants of this invention in the customary solvent or solvent blend using conventional techniques such as high speed mixing, ball milling, sand grinding, attritor guiding, or two or three roll milling with further removal of solvent and the like.

To form a pigment dispersion or a millbase, an individual pigment or a mixture of pigments, which may or may not be surface treated, is combined with one or more dispersants of this invention in the customary solvent or solvent blend and dispersed using conventional techniques such as high speed mixing, ball milling, sand grinding, attritor guiding, or two or three roll milling, and the like. The pigment dispersion can also be made by grinding or milling the dry pigments with the dispersants of the present invention or by mixing the pigments with the dispersant in a liquid medium in a pigment flushing process. The resulting pigment dispersion, whether as a millbase or ink/coating will have a dispersant to pigment weight ratio of about 0.1/100 to 2/1, more preferably about 1/100 to 1/2, and most preferably about 1/20 to 1/5.

It may be desirable to add other optional ingredients to the pigment dispersion such as antioxidants, flow control agents, UV stabilizers, light quenchers and absorbers, and rheology control agents such as fumed silica and microgels. Film forming polymers such as acrylics, acrylourethanes, polyester urethanes, polyesters, alkyds, polyethers and the like, can also be employed.

The dispersant composition may comprise a thermoset or a thermoplastic resin, crosslinking agents, flow leveling agents, wetting agents, thickeners, anti-settling agents, UV stabilizers and other additives to enhance the end use performance. The dispersants in this invention may be used together with other dispersion aids, such as a grinding resin or an additive to achieve synergistic effects.

Other additives may be used in combination with the dispersant and pigment of the present invention. For instance, ammonia or some other suitably functional amine may be used to adjust the pH of the dispersion. Biocides, such as Proxel GMX (available from Rohm & Haas, Philadelphia, Pa.) can be used to aid in the inhibition of bacterial growth. Glycols may be used to modify the properties of the dispersion and improve jettability in the case of an ink jet ink, and would preferably include propylene glycol, polyethylene glycol (such as PEG 200) 400 and 1000, available from Union Carbide, Danbury, Conn.). Defoamers, co-solvents and surface active agents, such as alkylated phenolethoxylates or acetylenics, may be used to modify surface tension. However, the amount of additive should be held to the minimum needed to achieve its desired function.

The polymeric dispersant as such or as a millbase or as surface modified pigment is added to the ink or coating composition which may be a solvent based, water based or energy curable (ultra-violet, electron beam or cationic), such as monomers, oligomers, etc. or solvent free systems such as plastics, or a combination of those systems. Examples of suitable solvents include but are not limited to aliphatic, cyclic and aromatic hydrocarbons, alcohols, esters, ketones, ethers, halogenated solvents or combination thereof. A pigment and dispersant, surface modified pigment or a preformed pigment dispersion can thus be added to a variety of aqueous or solvent borne inks or coatings or plastics (thermoplastic or thermoset systems). These compositions may contain film-forming polymers such as hydroxy functional acrylic and polyester resins and crosslinking agents such as blocked isocyanates, alkylated melamines, polyisocyanates, epoxy resins, and the like. Such inks and coatings can contain any known additive(s).

When formulated into an ink or coating, the pigment generally comprises about 0.1% up to about 70% by weight of the composition, preferably about 1% up to about 20%, and most preferably up to about 10%. The dispersant(s) will generally constitute about 0.1 to 50%, preferably less than 20% and more preferably less than 10% of the composition.

In order to further illustrate the invention, various examples are set forth below. In these, as throughout the specification and claims, all parts and percentages are by weight and all temperatures in degrees Centigrade unless otherwise indicated.

### Example 1

A reaction mixture containing 1800 g of a primary amine-terminated poly(propylene oxide (PO)/ ethylene oxide (EO)) methyl ether having an average equivalent molecular weight of about 2000 and a PO/EO ratio of 10/31, 482.7 g of dimethylsuccinyl succinate (dimethyl 2,5-dioxo-1,4-cyclohexanedicarboxylate from Sun Chemical) and 2.7 g of HCl (36.5-38 % from VWR) was heated to 120°C under nitrogen and the reaction continued for 2 hours. Then, 146 g of p-phenylenediamine (from Aldrich) was added to the reaction mixture and the reaction continued for 15 hours, at which time the reaction mixture was heated to 180°C for an additional 3 hours. The product (Dispersant 1) was dark red viscous polymer.

### Example 2

A reaction mixture containing 50.4 g of polyisobutylene 4-aminobenzamide A having an average equivalent molecular weight of about 1680 made from a primary amine-terminated polyisobutylene (Kerocom PIBA-03 from BASF) having an average equivalent molecular weight of about 1500, 4.02 g of dimethylsuccinyl succinate (from Sun Chemical) and 0.1 g of HCl (36.5-38 % from VWR) was heated to 120°C under nitrogen and maintained at that temperature for 2 hours to form Dispersant 2 (orange liquid). Dispersant 3, a dark red viscous liquid, was formed after heating Dispersant 2 to 200°C for 1 hour.

### Example 3

A reaction mixture of 146.3 g of poly(PO/EO) 4-aminobenzamide B having an average equivalent molecular weight of about 2120, made from a primary amine-terminated poly(PO/EO) methyl ether having an average equivalent molecular weight of about 2000 and a PO/EP ratio of 29/6, 10.43 g of dimethylsuccinyl succinate (from Sun Chemical) and 0.2 g of HCl (36.5-38 % from VWR) was heated to 120°C under nitrogen and maintained at the temperature for one hour. The reaction mixture was then heated to 200°C and vacuum applied. The reaction was continued under vacuum and nitrogen at 200-210°C for 5 hours to yield Dispersant 4, a red viscous polymer.

### Example 4

A mixture of 52402 g of poly(PO/EO) 4-aminobenzamide C having a an average equivalent molecular weight of about 2120, made from a primary amine-terminated poly(PO/EO) methyl ether having an average equivalent molecular weight of about 2000 and a PO/EP ratio of 10/31, 33.52 g of dimethylsuccinyl succinate (from Sun Chemical) and 0.7 g of HCl (36.5-38 % from VWR) was heated to 120°C under nitrogen, held at that temperature for 1 hour, and then heated to 200°C and vacuum applied. The reaction was continued under vacuum and nitrogen at 200-210°C for 3 hours. The resulting Dispersant 5 was a dark red viscous polymer.

### Example 5

A mixture of 233.1 g of poly(PO/EO) 2-aminobenzamide D having an average equivalent molecular weight of about 2120, made from a primary amine-terminated poly(PO/EO) methyl ether having an average equivalent molecular weight of about 2000 and a PO/EP ratio of 10/31, 26.8 g of dimethylsuccinyl succinate (from Sun Chemical) and 0.1 g of HCl (36.5-38 % from VWR) was heated to 120°C under nitrogen, held at that temperature for 4.5 hours. To the reaction mixture was added 9.78 g of aniline (from Aldrich) and the reaction was continued at 120°C under nitrogen for 1.5 hours. Then reaction was heated to 180°C under nitrogen for 3.5 hours. The resulting Dispersant 6 was an orange-red viscous liquid.

### Example 6

A reaction mixture containing 211.9 g of poly(PO/EO) 2-aminobenzamide D having an average equivalent molecular weight of about 2120 made from a primary amine-terminated poly(PO/EO) methyl ether having an average equivalent molecular weight of about 2000 and a PO/EP ratio of 10/31, 13.4 g of dimethylsuccinyl succinate (from Sun Chemical) and 0.1 g of HCl (36.5-38 % from VWR) was heated to 120°C under nitrogen, held at that temperature for 6 hours. Then reaction was heated to 180°C for 3 hours. The resulting Dispersant 7 was an orange liquid.

### Example 7

A mixture of 200 g a primary amine-terminated poly(PO/EO) methyl ether having an average equivalent molecular weight of about 2000 and a PO/EO ratio of 10/31, 60.4 g of a primary terminated poly(propylene oxide) diamine having an average equivalent molecular weight of about 400, 53.6 g of dimethylsuccinyl succinate (from Sun Chemical) and 0.3 g of HCl (36.5-38 % from VWR) was heated to 120°C under nitrogen, held at that temperature for 9 hours. Then reaction was heated to 180°C for 23 hours. The resulting Dispersant 8 was a dark red viscous liquid.

### Example 8

A mixture of 500 g a primary amine-terminated poly(PO/EO) methyl ether having an average equivalent molecular weight of about 2000 and a PO/EO ratio of 10/31, 25.8 g of 1,4-bis (3-aminopropyl)piperazine (97% from Aldrich), 67.0 g of dimethylsuccinyl succinate (from Sun Chemical) and 1.0 g of HCl (36.5-38 % from VWR) was heated to 120°C under nitrogen, held at that temperature for 17 hours. Then reaction was heated to 180°C for 25 hours. The resulting Dispersant 9 was a dark red viscous liquid.

### Example 9

A mixture of 93.4 g of Dispersant 9 and 4 g of sulfuric acid (96% from Aldrich) was stirred for 30 min at room temperature. The resulting Dispersant 10 was a dark red viscous liquid.

### Example 10

A mixture of 300 g a primary amine-terminated poly(PO/EO) methyl ether having an average equivalent molecular weight of about 2000 and a PO/EO ratio of 10/31, 8.8 g of 2-methyl-1,5-pentanediamine (99% from Aldrich), 40.2 g of dimethylsuccinyl succinate (from Sun Chemical) and 0.4 g of HCl (36.5-38 % from VWR) was heated to 120°C under nitrogen, held at that temperature for 22 hours. Then reaction was heated to 180°C for 15 hours. The resulting Dispersant 11 was a dark red viscous liquid.

### Example 11

A mixture of 45.85 g Dispersant 11 and 6.0 g of primary amine-terminated poly(propylene oxide) methyl ether having an average equivalent molecular weight of about 600 and a PO/EO ratio of 9/1 was heated to 180°C for 9 hours. The resulting Dispersant 12 was a dark red viscous liquid.

### Example 12

Water borne dispersions were formed by mixing the following pigments with Dispersant 1 were mixed for 30 minutes with sand as the grinding medium: DPP Red BO (from CIBA), Red 202 (Code #228-6843 from Sun Chemical); Red 179 (Code #229-6438 from Sun Chemical); 15:1 (Code # 248-4816 from Sun Chemical); Carbon Black 250 (from Degussa). The viscosity of final dispersion was measured by Brookfield DV-I+ Viscometer (spindle #4 at 60 rpm). If the viscosity was greater than 10,000 cps, it was designated "very thick." Identical formulations omitting the dispersant and increasing the water content to compensate were used as controls.

| Formula 1: | % | Amount, g | Initial Viscosity |
|---|---|---|---|
| Pigment DPP | 45.6 | 23.71 | |
| Dispersant 1 | 2.63 | 1.37 | |
| Water | 51.77 | 26.92 | |
| Total | 100% | 52 g | 80 cps |
| Sand media | | 40 g | |
| | | | |

| Control 1: | % | Amount, g | |
|---|---|---|---|
| Pigment DPP | 45.6 | 23.71 | |
| Water | 54.4 | 28.29 | |
| Total | 100% | 52 g | Very thick |
| Sand media | | 40 g | |
| | | | |

| Formula 2: | % | Amount, g | |
|---|---|---|---|
| Pigment DPP | 40.0 | 20.8 | |
| Dispersant 5 | 2.5 | 1.3 | |
| Water | 57.5 | 29.9 | |
| Total | 100% | 52 g | 320 cps |
| Sand media | | 40 g | |
| | | | |

| Control 2: | % | Amount, g | |
|---|---|---|---|
| Pigment DPP | 40.0 | 20.8 | |
| Water | 60 | 31.2 | |
| Total | 100% | 52 g | Very thick |
| Sand media | | 40 g | |
| | | | |

| Formula 3: | % | Amount, g | |
|---|---|---|---|
| Pigment Red 202 | 30 | 15.6 | |
| Dispersant 1 | 8.0 | 4.16 | |
| Water | 62.0 | 32.24 | |
| Total | 100% | 52 g | 260 cps |
| Sand media | | 40 g | |
| | | | |

| Control 3: | % | Amount, g | |
|---|---|---|---|
| Pigment Red 202 | 30 | 15.6 | |
| Water | 70 | 36.4 | |
| Total | 100% | 52 g | Very thick |
| Sand media | | 40 g | |
| | | | |

| Formula 4: | % | Amount, g | |
|---|---|---|---|
| Pigment Red 202 | 33.0 | 8.6 | |
| Dispersant 5 | 7.0 | 1.8 | |
| Water | 60.0 | 15.6 | |
| Total | 100% | 26 g | 40 cps |
| Sand media | | 20 g | |
| | | | |

| Control 4: | % | Amount, g | |
|---|---|---|---|
| Pigment Red 202 | 33.0 | 8.6 | |
| Water | 67.0 | 17.4 | |
| Total | 100% | 26 g | Very thick |
| Sand media | | 20 g | |
| | | | |
| | | | |

| Formula 5: | % | Amount, g | |
|---|---|---|---|
| Pigment Red 179 | 30 | 15.6 | |
| Dispersant 1 | 8.0 | 4.16 | |
| Water | 62.0 | 32.24 | |
| Total | 100% | 52 g | 60 cps |
| Sand media | | 40 g | |
| | | | |

| Control 5: | % | Amount, g | |
|---|---|---|---|
| Pigment Red 179 | 30 | 15.6 | |
| Water | 70 | 36.4 | |
| Total | 100% | 52 g | Very thick |
| Sand media | | 40 g | |
| | | | |
| | | | |

| Formula 6: | % | Amount, g | |
|---|---|---|---|
| Pigment Red 179 | 33.0 | 8.6 | |
| Dispersant 5 | 7.0 | 1.8 | |
| Water | 60.0 | 15.6 | |
| Total | 100% | 26 g | 30 cps |
| Sand media | | 20 g | |
| | | | |

| Control 6: | % | Amount, g | |
|---|---|---|---|
| Pigment Red 179 | 33.0 | 8.6 | |
| Water | 67.0 | 17.4 | |
| Total | 100% | 26 g | Very thick |
| Sand media | | 20 g | |
| | | | |
| | | | |

| Formula 7: | % | Amount, g | |
|---|---|---|---|
| Pigment Blue 15:1 | 33 | 17.16 | |
| Dispersant 1 | 7.0 | 3.64 | |
| Water | 60.0 | 31.2 | |
| Total | 100% | 52 g | 30 cps |
| Sand media | | 40 g | |
| | | | |
| | | | |

| Control 7: | % | Amount, g | |
|---|---|---|---|
| Pigment Blue 15:1 | 33 | 17.16 | |
| Water | 67 | 34.84 | |
| Total | 100% | 52 g | Very thick |
| Sand media | | 40 g | |
| | | | |
| | | | |

| Formula 8: | % | Amount, g | |
|---|---|---|---|
| Pigment Black 250 | 40 | 20.8 | |
| Dispersant 1 | 7.0 | 3.64 | |
| Water | 53.0 | 27.56 | |
| Total | 100% | 52 g | 310 cps |
| Sand media | | 40 g | |
| | | | |

| Control 8: | % | Amount, g | |
|---|---|---|---|
| Pigment Black 250 | 40 | 20.8 | |
| Water | 60 | 31.2 | |
| Total | 100% | 52 g | Very thick |
| Sand media | | 40 g | |

### Example 13

Oil based dispersions were formed by mixing Dispersant 2 or 3 (32.4% and 64.4% active content in n-Paraffins, C₈₋₂₀) with Pigment Red 202 (Code #228-6843 from Sun Chemical) and Magiesol 47 oil (from Magie Bros.) for 4 minutes with sand as the grinding medium. The viscosity (flow) of the final dispersion was measured by flow plate technique. An identical formulation omitting the dispersant and increasing the oil content to compensate were used as a control.

| Formula 9: | % | Amount, g | Flow, cm/sec |
|---|---|---|---|
| Pigment Red 202 | 33.3 | 1.75 | |
| Dispersant 2 | 7.6 | 0.4 | |
| 47 oil | 59.1 | 3.1 | |
| Total | 100% | 5.25 g | 16.5 cm/28 sec |
| Sand media | | 5 g | |
| | | | |

| Formula 10: | % | Amount, g | |
|---|---|---|---|
| Pigment Red 202 | 33.3 | 1.75 | |
| Dispersant 3 | 6.9 | 0.36 | |
| 47 oil | 59.8 | 3.14 | |
| Total | 100% | 5.25 g | 19 cm/28 sec |
| Sand media | | 5 g | |
| | | | |
| | | | |

| Control 9/10: | % | Amount, g | |
|---|---|---|---|
| Pigment Red 202 | 33.3 | 1.75 | |
| 47 oil | 66.7 | 3.5 | |
| Total | 100% | 5.25 g | No flow |
| Sand media | | 5 g | |

### Example 14

A solvent born dispersion containing Dispersant 4, Pigment Red 179 (Code #229-6438 from Sun Chemical) and n-butyl propionate (from Aldrich) was prepared by mixing for 10 minutes using sand as the grinding medium. The final dispersion viscosity was measured by flow plate technique. An identical formulations omitting the dispersant and increasing the ester content to compensate was used as controls.

| Formula 11: | % | Amount, g | Flow, cm/sec |
|---|---|---|---|
| Pigment Red 179 | 40.0 | 2.0 | |
| Dispersant 4 | 6.0 | 0.3 | |
| n-Butyl Propionate | 54.0 | 2.7 | |
| Total | 100% | 5 g | 15.5 cm/60 sec |
| Sand media | | 5 g | |
| | | | |

| Control 11: | % | Amount, g | |
|---|---|---|---|
| Pigment Red 179 | 40.0 | 2.0 | |
| n-Butvl Propionate | 60.0 | 3.0 | |
| Total | 100% | 5 g | No flow |
| Sand media | | 5 g | |

### Example 15

An UV Flexo dispersion was made by mixing Pigment Red 179 (Code #229-6438 from Sun Chemical); oligomer CN2102E and monomer SR306 (from Sartomer) with Dispersant 4 for 5 minutes with sand as the grinding medium. The viscosity of the final dispersion was measured by flow plate technique. An identical formulation omitting the dispersant and increasing the oligomer and monomer content to compensate wasused as a control.

| Formula 12: | % | Amount, g | Flow, cm/sec |
|---|---|---|---|
| Pigment R179 | 30.0 | 1.5 | |
| Dispersant 4 | 8.0 | 0.4 | |
| Oligomer CN2102E | 31.0 | 1.55 | |
| Monomer SR306 | 31.0 | 1.55 | |
| Total | 100% | 5.0 g | 8.5 cm/40 sec |
| Sand media | | 5.0 g | |
| | | | |

| Formula 13: | % | Amount, g | Flow, cm/sec |
|---|---|---|---|
| Pigment R179 | 30.0 | 1.5 | |
| Dispersant 10 | 8.0 | 0.4 | |
| Oligomer CN2102E | 31.0 | 1.55 | |
| Monomer SR306 | 31.0 | 1.55 | |
| Total | 100% | 5.0 g | 17 cm/ 36 sec |
| Sand media | | 5.0 g | |
| | | | |

| Control 12/13: | % | Amount, g | |
|---|---|---|---|
| Pigment R179 | 30.0 | 1.5 | |
| Oligomer CN2102E | 35.0 | 1.75 | |
| Monomer SR306 | 35.0 | 1.75 | |
| Total | 100% | 5.0 g | No flow |
| Sand media | | 5.0 g | |

### Example 16

Water borne dispersion was prepared using pigments Red 254 (Code #226-0200 from Sun Chemical), Red 202 (Code #228-6843 from Sun Chemical), Red 122 (Code #228-0122 from Sun Chemical) or Red 179 (Code #229-6438 from Sun Chemical). All samples were mixed for 30 minutes with sand as the grinding medium. The final dispersion viscosity was measured by Brookfield DV-I+ Viscometer (with spindle #3 at 100 rpm). An identical formulation omitting the dispersant and increasing the water content to compensate was used as controls.

| Formula 14: | % | Amount, g | Initial Viscosity |
|---|---|---|---|
| Pigment Red 254 | 40.0 | 20.8 | |
| Dispersant 6 | 2.5 | 1.3 | |
| Water | 57.5 | 29.9 | |
| Total | 100% | 52 g | 236 cps |
| Sand media | | 40 g | |
| | | | |
| | | | |

| Formula 15: | % | Amount, g | Initial Viscosity |
|---|---|---|---|
| Pigment Red 254 | 40.0 | 20.8 | |
| Dispersant 8 | 2.5 | 1.3 | |
| Water | 57.5 | 29.9 | |
| Total | 100% | 52 g | 30 cps |
| Sand media | | 40 g | |
| | | | |

| Control 14/15: | % | Amount, g | |
|---|---|---|---|
| Pigment Red 254 | 40.0 | 20.8 | |
| Water | 60 | 31.2 | |
| Total | 100% | 52 g | Very thick |
| Sand media | | 40 g | |
| | | | |

| Formula 16: | % | Amount, g | |
|---|---|---|---|
| Pigment Red 202 | 33.0 | 8.6 | |
| Dispersant 6 | 8.0 | 2.1 | |
| Water | 59.0 | 15.3 | |
| Total | 100% | 26 g | 46 cps |
| Sand media | | 20 g | |
| | | | |

| Formula 17: | % | Amount, g | |
|---|---|---|---|
| Pigment Red 202 | 33.0 | 8.6 | |
| Dispersant 7 | 8.0 | 2.1 | |
| Water | 59.0 | 15.3 | |
| Total | 100% | 26 g | 52 cps |
| Sand media | | 20 g | |
| | | | |

| Formula 19: | % | Amount, g | |
|---|---|---|---|
| Pigment Red 202 | 33.0 | 8.6 | |
| Dispersant 8 | 8.0 | 2.1 | |
| Water | 59.0 | 15.3 | |
| Total | 100% | 26 g | 413 cps |
| Sand media | | 20 g | |
| | | | |

| Control 16/17/19: | % | Amount, g | |
|---|---|---|---|
| Pigment Red 202 | 33.0 | 8.6 | |
| Water | 67.0 | 17.4 | |
| Total | 100% | 26 g | Very thick |
| Sand media | | 20 g | |
| | | | |

| Formula 20: | % | Amount, g | |
|---|---|---|---|
| Pigment Red 179 | 33.0 | 8.6 | |
| Dispersant 6 | 8.0 | 2.1 | |
| Water | 59.0 | 15.3 | |
| Total | 100% | 26 g | 67 cps |
| Sand media | | 20 g | |
| | | | |
| | | | |
| | | | |
| | | | |

| Formula 21: | % | Amount, g | |
|---|---|---|---|
| Pigment Red 179 | 33.0 | 8.6 | |
| Dispersant 7 | 8.0 | 2.1 | |
| Water | 59.0 | 15.3 | |
| Total | 100% | 26 g | 34 cps |
| Sand media | | 20 g | |
| | | | |

| Formula 22: | % | Amount, g | |
|---|---|---|---|
| Pigment Red 179 | 33.0 | 8.6 | |
| Dispersant 8 | 8.0 | 2.1 | |
| Water | 59.0 | 15.3 | |
| Total | 100% | 26 g | 163 cps |
| Sand media | | 20 g | |
| | | | |

| Control 20/21/22: | % | Amount, g | |
|---|---|---|---|
| Pigment Red 179 | 33.0 | 8.6 | |
| Water | 67.0 | 17.4 | |
| Total | 100% | 26 g | Very thick |
| Sand media | | 20 g | |
| | | | |

| Formula 23: | % | Amount, g | |
|---|---|---|---|
| Pigment Red 122 | 30.0 | 7.8 | |
| Dispersant 6 | 8.0 | 2.1 | |
| Water | 62.0 | 16.1 | |
| Total | 100% | 26 g | 155 cps |
| Sand media | | 20 g | |
| | | | |

| Formula 24: | % | Amount, g | |
|---|---|---|---|
| Pigment Red 122 | 30.0 | 7.8 | |
| Dispersant 8 | 8.0 | 2.1 | |
| Water | 62.0 | 16.1 | |
| Total | 100% | 26 g | 520 cps |
| Sand media | | 20 g | |
| | | | |

| Control 23/24: | % | Amount, g | |
|---|---|---|---|
| Pigment Red 122 | 30.0 | 7.8 | |
| Water | 70.0 | 18.2 | |
| Total | 100% | 26 g | Very thick |
| Sand media | | 20 g | |

### Example 17

Water borne dispersions were prepared using pigments Red 254 (Code #226-0200 from Sun Chemical), Red 202 (Code #228-6843 from Sun Chemical), Red 122 (Code #228-0122 from Sun Chemical) or Red 179 (Code #229-6438 from Sun Chemical), Carbon Black 250 (from Degussa). All samples were mixed for 30 minutes with sand as the grinding medium. The final dispersion viscosity was measured by Brookfield DV-I+ Viscometer (with spindle #4 at 50 rpm). Identical formulations omitting the dispersant and increasing the water content to compensate were used as controls.

| Formula 25: | % | Amount, g | Initial Viscosity |
|---|---|---|---|
| Pigment Red 254 | 40.0 | 20.8 | |
| Dispersant 9 | 2.5 | 1.3 | |
| Water | 57.5 | 29.9 | |
| Total | 100% | 52 g | 108 cps |
| Sand media | | 40 g | |

| Formula 26: | % | Amount, g | |
|---|---|---|---|
| Pigment Red 254 | 40.0 | 20.8 | |
| Dispersant 11 | 2.5 | 1.3 | |
| Water | 57.5 | 29.9 | |
| Total | 100% | 52 g | 48 cps |
| Sand media | | 40 g | |
| | | | |

| Control 25/26: | % | Amount, g | |
|---|---|---|---|
| Pigment Red 254 | 40.0 | 20.8 | |
| Water | 60 | 31.2 | |
| Total | 100% | 52 g | Very thick |
| Sand media | | 40 g | |
| | | | |

| Formula 27: | % | Amount, g | |
|---|---|---|---|
| Pigment Red 202 | 33.0 | 8.6 | |
| Dispersant 9 | 8.0 | 2.1 | |
| Water | 59.0 | 15.3 | |
| Total | 100% | 26 g | 972 cps |
| Sand media | | 20 g | |
| | | | |

| Formula 28: | % | Amount, g | |
|---|---|---|---|
| Pigment Red 202 | 33.0 | 8.6 | |
| Dispersant 12 | 8.0 | 2.1 | |
| Water | 59.0 | 15.3 | |
| Total | 100% | 26 g | 48 cps |
| Sand media | | 20 g | |
| | | | |

| Control 27/28: | % | Amount, g | |
|---|---|---|---|
| Pigment Red 202 | 33.0 | 8.6 | |
| Water | 67.0 | 17.4 | |
| Total | 100% | 26 g | Very thick |
| Sand media | | 20 g | |
| | | | |
| | | | |
| | | | |

| Formula 29: | % | Amount, g | |
|---|---|---|---|
| Pigment Red 179 | 33.0 | 8.6 | |
| Dispersant 9 | 8.0 | 2.1 | |
| Water | 59.0 | 15.3 | |
| Total | 100% | 26 g | 156 cps |
| Sand media | | 20 g | |
| | | | |

| Formula 30: | % | Amount, g | |
|---|---|---|---|
| Pigment Red 179 | 33.0 | 8.6 | |
| Dispersant 12 | 8.0 | 2.1 | |
| Water | 59.0 | 15.3 | |
| Total | 100% | 26 g | 72 cps |
| Sand media | | 20 g | |
| | | | |

| Control 29/30: | % | Amount, g | |
|---|---|---|---|
| Pigment Red 179 | 33.0 | 8.6 | |
| Water | 67.0 | 17.4 | |
| Total | 100% | 26 g | Very thick |
| Sand media | | 20 g | |
| | | | |

| Formula 31: | % | Amount, g | |
|---|---|---|---|
| Pigment Red 122 | 30.0 | 7.8 | |
| Dispersant 9 | 8.0 | 2.1 | |
| Water | 62.0 | 16.1 | |
| Total | 100% | 26 g | 672 cps |
| Sand media | | 20 g | |
| | | | |

| Formula 32: | % | Amount, g | |
|---|---|---|---|
| Pigment Red 122 | 30.0 | 7.8 | |
| Dispersant 11 | 8.0 | 2.1 | |
| Water | 62.0 | 16.1 | |
| Total | 100% | 26 g | 60 cps |
| Sand media | | 20 g | |
| | | | |

| Formula 33: | % | Amount, g | |
|---|---|---|---|
| Pigment Red 122 | 30.0 | 7.8 | |
| Dispersant 12 | 8.0 | 2.1 | |
| Water | 62.0 | 16.1 | |
| Total | 100% | 26 g | 48 cps |
| Sand media | | 20 g | |

| Control 31/32/33: | % | Amount, g | |
|---|---|---|---|
| Pigment Red 122 | 30.0 | 7.8 | |
| Water | 70.0 | 18.2 | |
| Total | 100% | 26 g | Very thick |
| Sand media | | 20 g | |
| | | | |
| | | | |
| | | | |
| | | | |
| | | | |

| Formula 34: | % | Amount, g | |
|---|---|---|---|
| Pigment Black 250 | 48 | 19.2 | |
| Dispersant 11 | 5.2 | 2.08 | |
| Water | 46.8 | 18.72 | |
| Total | 100% | 40 g | 396 cps |
| Sand media | | 40 g | |
| | | | |

| Formula 35: | % | Amount, g | |
|---|---|---|---|
| Pigment Black 250 | 48 | 19.2 | |
| Dispersant 12 | 5.2 | 2.08 | |
| Water | 46.8 | 18.72 | |
| Total | 100% | 40 g | 192 cps |
| Sand media | | 40 g | |

| Control 34/35: | % | Amount, g | |
|---|---|---|---|
| Pigment Black 250 | 48 | 19.2 | |
| Water | 52 | 20.8 | |
| Total | 100% | 40 g | Very thick |
| Sand media | | 40 g | |

## Claims

1. A pigment dispersant comprising
• the reaction product of at least one dialkylsuccinyl succinate and one or more mono- or diamine in which at least one amino group is primary, or
• an oxidized, cyclized or functionalized, by salt formation, hydrolysis or amide formation, product of the reaction product, wherein at least one of the one or more mono- or diamine is polymeric and contains a poly(alkylene oxide) or poly(alkylene) moiety.

2. The pigment dispersant of claim 1 in which the succinate is a di(lower alkyl)succinyl succinate.

3. The pigment dispersant of claim 1 in which the succinate is a di(lower alkyl)succinyl succinate and the amine is selected from the group of amines containing an aliphatic, aromatic or heterocyclic group or a combination thereof.

4. The pigment dispersant of claim 1 in which the succinate is a di(lower alkyl)succinyl succinate and the amine comprises aniline or a derivative thereof.

5. A pigment dispersant according to claim 1 which is a reaction product which contains one or both of the partial structural formulae 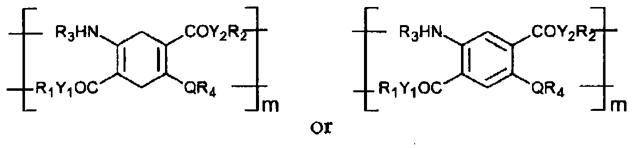 wherein m is an integer from 1 to 10, eachY₁ and Y₂ are independently O, S or NR', Q is O or NH, each R₁, R₂, R₃, R₄ and R' is independently hydrogen or a linear, branched or cyclic aliphatic or aromatic carbon-containing group or a combination thereof, provided that at least one R is polymeric and contains a poly(alkylene oxide) or poly(alkylene) moiety.

6. A pigment dispersant according to claim 1, which is one or a mixture of the formulae 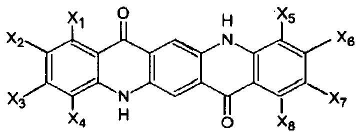 or 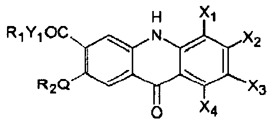 or 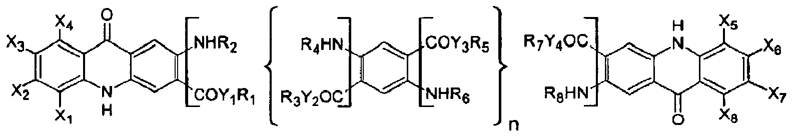 and in the last of said formulae, at least one of the NH- and CO-containing groups of each chain terminal group is linked to a NH- or CO-containing group of the adjacent repeating unit;
wherein n is 0 to 10, Q is O or NH, each of Y₁ through Y₄ is independently O, S or NR'; each of X₁ through X₈ is individually selected from the group consisting of R", OR", COR", COOR", OCOR", carboxylate, halogen, CN, NR"R"', SO₃H, sulfonate, sulfate, NR"(COR"'), CONR", PO₃H₂, phosphonate, N=NR", SOR", NSO₂R", each of R₁, R₂, R₃, R₄, R₅, R₆, R₇, R₈, R', R" and R"' is independently hydrogen or carbon-containing group, provided that at least one of the various R groups is polymeric.

7. The dispersant of claim 1, wherein the amine conforms to the formula (Z¹HN)ₘ-R-(NHZ²)ₙ in which n and m are independently 0, 1, 2 or more, and m plus n is at least 1, and R, Z¹ and Z² in each amine are independently hydrogen or linear, branched or cyclic aliphatic, heterocyclic or aromatic group or combination thereof, provided that at least one amine reactant has at least one primary amino group and wherein the amine is polymeric and contains a poly(alkylene oxide) or poly(alkylene) moiety.

8. The dispersant of any one of claims 1 to 7 in combination with a pigment.

9. The dispersant of claim 8 in combination with at least one of a solvent, ink vehicle, coating vehicle or plastic.

10. The dispersant of claim 8 in combination with an ink jet vehicle.

11. A method of preparing the pigment dispersant of claim 1 which comprises reacting at least one dialkylsuccinyl succinate with at least one amine containing a primary amino group, wherein at least one of the at least one amines is polymeric having an equivalent average molecular weight of at least about 250 and wherein the amine is polymeric and contains a poly(alkylene oxide) or poly(alkylene) moiety.

12. A method of preparing the pigment dispersant according to claim 11 which further comprises performing a functional group modification of the reaction product in which the functional group modification is selected from the group consisting of salt formation, cyclization, hydrolysis, and amide formation.

13. A method of preparing the pigment dispersant according to claim 11 in which the functional group modification comprises oxidation of the reaction product.

14. A method of preparing the pigment dispersant according to claim 13 in which the oxidized reaction product is cyclized.

15. A method of dispersing a pigment which comprises combining the pigment with at least one dispersant of any one of claims 1 to 7.

16. The method of dispersing a pigment of claim 15 in which the pigment is combined with at least one dispersant of any one of claims 1 to 7 in the presence of a liquid or plastic material.

## Patentansprüche

1. Pigmentdispergator, umfassend
• das Reaktionsprodukt von mindestens einem Dialkylsuccinylsuccinat und einem oder mehreren Mono- oder Diaminen, in welchen mindestens eine Aminogruppe primär ist, oder
• ein oxidiertes, cyclisiertes oder funktionalisiertes, durch Salzbildung, Hydrolyse oder Amidbildung, Produkt des Reaktionsproduktes, wobei mindestens eines von dem einen oder mehreren Mono- oder Diaminen polymer ist und eine Poly(alkylenoxid)- oder Poly(alkylen)-Einheit enthält.

2. Pigmentdispergator nach Anspruch 1, wobei das Succinat ein Di(niederalkyl)succinylsuccinat ist.

3. Pigmentdispergator nach Anspruch 1, wobei das Succinat ein Di(niederalkyl)succinylsuccinat ist und das Amin aus der Gruppe von Aminen, die einen aliphatischen, aromatischen oder heterocyclischen Rest oder eine Kombination davon enthalten, ausgewählt ist.

4. Pigmentdispergator nach Anspruch 1, wobei das Succinat ein Di(niederalkyl)succinylsuccinat ist und das Amin Anilin oder ein Derivat davon umfasst.

5. Pigmentdispergator gemäß Anspruch 1, welcher ein Reaktionsprodukt ist, das eine oder beide der Teilstrukturformeln 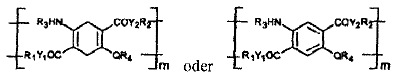 enthält, wobei m eine ganze Zahl von 1 bis 10 ist, jeder Y₁ und Y₂ unabhängig voneinander O, S oder NR' ist, Q O oder NH ist, jeder R₁, R₂, R₃, R₄ und R' unabhängig voneinander Wasserstoff oder ein linearer, verzweigter oder cyclischer aliphatischer oder aromatischer kohlenstoffhaltiger Rest oder eine Kombination davon ist, mit der Maßgabe, dass mindestens ein R polymer ist und eine Poly(alkylenoxid)- oder Poly(alkylen)-Einheit enthält.

6. Pigmentdispergator gemäß Anspruch 1, welcher eine oder ein Gemisch der folgenden Formeln aufweist 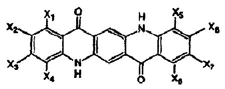 oder 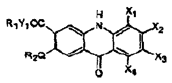 oder 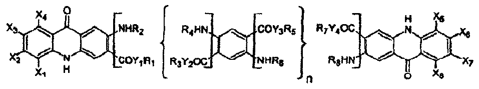 und wobei in der letzten der Formeln mindestens einer der NH- und CO-haltigen Reste von jedem terminalem Kettenrest an einen NH- oder CO-haltigen Rest der benachbarten Wiederholungseinheit gebunden ist;
wobei n 0 bis 10 ist, Q O oder NH ist, jeder von Y₁ bis Y₄ unabhängig voneinander O, S oder NR' ist; jeder von X, bis X₈ einzeln aus der Gruppe ausgewählt ist, die aus R'', OR", COR", COOR", OCOR", Carboxylat, Halogen, CN, NR"R"', SO₃H, Sulfonat, Sulfat, NR"(COR"'), CONR", PO₃H₂, Phosphonat, N=NR'', SOR", NSO₂R'' besteht, jeder von R₁, R₂, R₃, R₄, R₅, R₆, R₇, R₈, R', R'' und R''' unabhängig voneinander Wasserstoff oder ein kohlenstoffhaltiger Rest ist, mit der Maßgabe, dass mindestens einer der unterschiedlichen Reste R polymer ist.

7. Dispergator nach Anspruch 1, wobei das Amin der Formel (Z¹HN)ₘ-R-(NHZ²)ₙ entspricht, wobei n und m unabhängig voneinander 0, 1, 2 oder höher sind, und m plus n mindestens 1 beträgt, und R, Z¹ und Z² in jedem Amin unabhängig voneinander Wasserstoff oder ein linearer, verzweigter oder cyclischer aliphatischer, heterocyclischer oder aromatischer Rest oder eine Kombination davon sind, mit der Maßgabe, dass mindestens ein Aminreaktant mindestens eine primäre Aminogruppe aufweist, und wobei das Amin polymer ist und eine Poly(alkylenoxid)- oder Poly(alkylen)-Einheit enthält.

8. Dispergator nach einem der Ansprüche 1 bis 7 in Kombination mit einem Pigment.

9. Dispergator nach Anspruch 8 in Kombination mit mindestens einem von einem Lösungsmittel, Tintenvehikel, Beschichtungsvehikcl oder Kunststoff.

10. Dispergator nach Anspruch 8 in Kombination mit einem Tintenstrahlvehikel.

11. Verfahren zur Herstellung des Pigmentdispergators nach Anspruch 1, welches Umsetzen von mindestens einem Dialkylsuccinylsuccinat mit mindestens einem Amin, das eine primäre Aminogruppe enthält, umfasst, wobei mindestens eines des mindestens einen Amins polymer ist und ein mittleres Äquivalentmolekulargewicht von mindestens etwa 250 aufweist und wobei das Amin polymer ist und eine Poly(alkylenoxid)- oder Poly(alkylen)-Einheit enthält.

12. Verfahren zur Herstellung des Pigmentdispergators gemäß Anspruch 11, welches ferner Durchführen einer Modifizierung einer funktionellen Gruppe des Reaktionsprodukts umfasst, wobei die Modifizierung einer funktionellen Gruppe aus der Gruppe ausgewählt ist, die aus Salzbildung, Cyclisierung, Hydrolyse und Amidbildung besteht.

13. Verfahren zur Herstellung des Pigmentdispergators gemäß Anspruch 11, wobei die Modifizierung einer funktionellen Gruppe Oxidation des Reaktionsprodukts umfasst.

14. Verfahren zur Herstellung des Pigmentdispergators gemäß Anspruch 13, wobei das oxidierte Reaktionsprodukt cyclisiert wird.

15. Verfahren zum Dispergieren eines Pigments, welches Kombinieren des Pigments mit mindestens einem Dispergator nach einem der Ansprüche 1 bis 7 umfasst.

16. Verfahren zum Dispergieren eines Pigments nach Anspruch 15, wobei das Pigment mit mindestens einem Dispergator nach einem der Ansprüche 1 bis 7 in der Gegenwart eines flüssigen oder Kunststoffmaterials kombiniert wird.

## Revendications

1. Dispersant de pigment comprenant
. le produit de réaction d'au moins un succinate de dialkylsuccinyle et d'une ou plusieurs mono- ou diamines dans lequel au moins un groupe amino est un groupe primaire, ou
. un produit du produit de réaction oxydé, cyclisé ou fonctionnalisé, par formation de sel, hydrolyse ou formation d'amide, dans lequel au moins une de la une ou plusieurs mono- ou diamines est un polymère et contient une moitié poly(oxyde d'alkylène) ou poly(alkylène).

2. Dispersant de pigment selon la revendication 1, dans lequel le succinate est un succinate de di(alkyle inférieur)succinyle.

3. Dispersant de pigment selon la revendication 1, dans lequel le succinate est un succinate de di(alkyle inférieur)succinyle et l'amine est choisie dans le groupe d'amines contenant un groupe aliphatique, aromatique ou hétérocyclique ou une combinaison de ceux-ci.

4. Dispersant de pigment selon la revendication 1, dans lequel le succinate est un succinate de di(alkyle inférieur)succinyle et l'amine comprend de l'aniline ou un dérivé de celle-ci.

5. Dispersant de pigment selon la revendication 1, lequel est un produit de réaction qui contient une ou les deux des formules de structure partielle 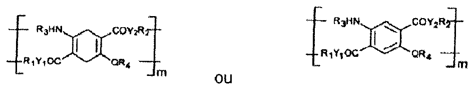 dans lesquelles m est un nombre entier de 1 à 10, chaque Y₁ et Y₂ est indépendamment O, S ou NR', Q est O ou NH, chaque R₁, R₂, R₃, R₄ et R' est indépendamment l'hydrogène ou un groupe contenant un carbone aliphatique ou aromatique, linéaire, ramifié ou cyclique ou une combinaison de ceux-ci, à condition qu'au moins un R est un polymère et contient une moitié poly(oxyde d'alkylène) ou poly(alkylène).

6. Dispersant de pigment selon la revendication 1, lequel est une ou un mélange des formules 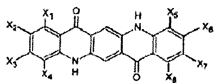 ou 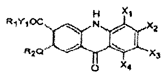 ou 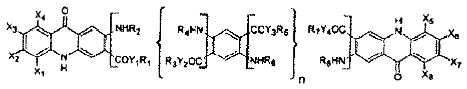 et dans la dernière desdites formules, au moins un des groupes contenant NH et CO de chaque groupe terminal de chaîne est lié à un groupe contenant NH ou CO de l'unité répétitive adjacente ;
dans laquelle n est égal à de 0 à 10, Q est O ou NH, chacun de Y₁ à Y₄ est indépendamment O, S ou NR' ; chacun de X₁ à X₈ est individuellement choisi dans le groupe constitué de R", OR", COR", COOR", OCOR", un groupe carboxylate, un halogène, un groupe CN, NR"R"', SO₃H, sulfonate, sulfate, NR"(COR"'), CONR", PO₃H₂, phosphonate, N=NR", SOR", NSO₂R", chacun de R₁, R₂, R₃, R₄, R₅, R₆, R₇, R₈, R', R" et R"' est indépendamment l'hydrogène ou un groupe contenant un carbone, à condition qu'au moins un des différents groupes R est un polymère.

7. Dispersant selon la revendication 1, dans lequel l'amine est conforme à la formule (Z¹HN)ₘ-R-(NHZ²)ₙ, dans laquelle n et m sont indépendamment égaux à 0, 1, 2 ou plus, et m plus n est au moins égal à 1, et R, Z¹ et Z² dans chaque amine sont indépendamment l'hydrogène ou un groupe aliphatique, hétérocyclique ou aromatique linéaire, ramifié ou cyclique ou une combinaison de ceux-ci, à condition qu'au moins un corps réagissant d'amine présente au moins un groupe amino primaire et dans laquelle l'amine est un polymère et contient une moitié poly(oxyde d'alkylène) ou poly(alkylène).

8. Dispersant selon l'une quelconque des revendications 1 à 7 en combinaison avec un pigment.

9. Dispersant selon la revendication 8 en combinaison avec au moins un d'un solvant, un véhicule d'encre, un véhicule de revêtement ou une matière plastique.

10. Dispersant selon la revendication 8 en combinaison avec un véhicule de jet d'encre.

11. Procédé de préparation du dispersant de pigment selon la revendication 1, lequel comprend la réaction d'au moins un succinate de dialkylsuccinyle avec au moins une amine contenant un groupe amino primaire, dans lequel au moins une des au moins une amine est un polymère présentant une masse moléculaire moyenne équivalente d'au moins environ 250 et dans lequel l'amine est un polymère et contient une moitié poly(oxyde d'alkylène) ou poly(alkylène).

12. Procédé de préparation du dispersant de pigment selon la revendication 11 qui comprend de plus la réalisation d'une modification de groupe fonctionnel du produit de réaction dans lequel la modification de groupe fonctionnel est choisie dans le groupe constitué d'une formation de sel, d'une cyclisation, d'une hydrolyse, et d'une formation d'amide.

13. Procédé de préparation du dispersant de pigment selon la revendication 11, dans lequel la modification de groupe fonctionnel comprend une oxydation du produit de réaction.

14. Procédé de préparation du dispersant de pigment selon la revendication 13, dans lequel le produit de réaction oxydé est cyclisé.

15. Procédé de dispersion d'un pigment qui comprend la combinaison du pigment avec au moins un dispersant selon l'une quelconque des revendications 1 à 7.

16. Procédé de dispersion d'un pigment selon la revendication 15, dans lequel le pigment est combiné avec au moins un dispersant selon l'une quelconque des revendications 1 à 7 en présence d'un matériau liquide ou plastique.
